# EUROPÄISCHE PATENTSCHRIFT

(11) **EP 2 660 295 B1**
(45) Veröffentlichungstag und Bekanntmachung des Hinweises auf die Patenterteilung: **08.06.2022**
(21) Anmeldenummer: 13163753.0
(22) Anmeldetag: 15.04.2013
(51) Int. Cl.: C09D 5/08, C09D 177/00, C08G 61/08, C09D 177/02, C09D 177/06, F16L 58/10

(54) **Metallgegenstand beschichtet mit einer Zusammensetzung enthaltend olefinische Doppelbindungen**
Metal article coated with a composition comprising olefinic double bonds
Objet métallique revêtu avec une composition comprenant des liaisons doubles oléfiniques

(30) Priorität: 30.04.2012 DE 102012207173
(43) Veröffentlichungstag der Anmeldung: 06.11.2013
(73) Patentinhaber: Evonik Operations GmbH, 45128 Essen (DE)
(72) Erfinder: Berger, Jan, 44141 Dortmund (DE); Gahlmann, Klaus, 45770 Marl (DE); Häger, Harald, 59348 Lüdinghausen (DE); Hartmann, Markus, 48324 Sendenhorst (DE); Nitsche, Jasmin Dr., 44141 Dortmund (DE)
(74) Vertreter: Evonik Patent Association

(56) Entgegenhaltungen:
- WO-A1-03/102095
- WO-A1-2004/046217
- DE-T2- 60 225 144
- US-A- 5 686 535
- US-A1- 2011 014 443
- US-A1- 2011 200 818

## Beschreibung

Die Erfindung betrifft ein Verfahren zur Beschichtung eines Metallgegenstands mit einer Polymerzusammensetzung, die mehrfach ungesättigte Verbindungen enthält, sowie die entsprechenden beschichteten Metallgegenstände und deren Verwendung. Die beschichteten Metallgegenstände können beispielsweise mit der Polymerzusammensetzung umhüllte Metallrohre sein.

Metallgegenstände, die für Anwendungen bestimmt sind, bei denen sie korrosionsfördernden Umwelteinflüssen ausgesetzt sind, können mit einer Schutzschicht aus Polymermaterialien beschichtet werden, die als Schmelze auf den Metallgegenstand appliziert wird, etwa mittels Extrusionsbeschichtung. Hierdurch wird nicht nur der Zutritt des korrosionsfördernden Agens zur Metalloberfläche versperrt, sondern auch ein gewisser mechanischer Schutz der Oberfläche beispielsweise gegen Beanspruchungen wie Friktion, Schlag oder Stoß bewirkt. Dieser Schutz ist auch dann wünschenswert, wenn die Oberfläche vor der Beschichtung zusätzlich eine Korrosionsschutzbehandlung erfahren hat. Unabdingbare Voraussetzung ist hierbei, dass die aufgebrachte Beschichtung fest haftet, damit bei mechanischer Beschädigung das korrosionsfördernde Agens, beispielsweise Wasser oder wässrige Salzlösung, die Beschichtung nicht unterwandert.

Wenn der Metallgegenstand beispielsweise aus Aluminium, einer Aluminiumlegierung, Zink oder verzinktem Stahl besteht, wurde er bislang üblicherweise durch Chromatierung vorbehandelt. Hierdurch wird eine Passivierungsschicht erzeugt, die sowohl eine Verbesserung der Korrosionsbeständigkeit als auch eine Verbesserung der Haftung einer nachträglich aufgebrachten Polymerzusammensetzung bewirkt. Aufgrund neuer gesetzlicher Richtlinien wie der EU-Altfahrzeugverordnung und der RoHS-Richtlinie sind Chromatierungen mit krebserregenden Chrom(VI)-haltigen Stoffen in vielen Bereichen allerdings nicht mehr zulässig. Dadurch entstand ein großes Interesse an Chrom(VI)-freien Alternativen. Beispiele hierfür sind Chrom(III)-Passivierungen, die aber vergleichsweise schwächer sind, oder die Verwendung von Passivierungsbädern, die Titan(IV)- und/oder Zirkonium(VI)-salze, beispielsweise komplexe Fluoride, enthalten und mit denen eine Passivierungsschicht aus Titan- bzw. Zirkoniumoxid gebildet wird. In derartigen Passivierungsbädern kann auch die Verwendung anderer Metallsalze wie beispielsweise von Kobaltsalzen oder Cersalzen eine Rolle spielen. Bei verschärften Anforderungen kann die erhaltene Passivierungsschicht als Haftgrundlage für eine Beschichtung mit einem thermoplastischen oder duroplastischen Polymersystem dienen; hierdurch wird der Korrosionsschutz weiter verbessert.

Eine weitere Möglichkeit des Korrosionsschutzes ist die Phosphatierung. Die Phosphatierung ist ein weit verbreitetes Verfahren in der Oberflächentechnik, bei dem durch chemische Reaktion von metallischen Oberflächen mit wässrigen Phosphatlösungen bzw. wässriger Phosphorsäure eine Schicht aus fest haftenden Metallphosphaten gebildet wird. Die Phosphatierung wird meist bei Stahl angewandt, kann aber auch für verzinkte oder cadmierte Stähle und Aluminium verwendet werden. Phosphatschichten alleine bieten einen brauchbaren temporären Korrosionsschutz, der für das Lagern vor einem nachfolgenden Verarbeitungsschritt oft ausreicht. In der Praxis werden Phosphatschichten sehr häufig als Untergrund für nachfolgende weitere Beschichtungen verwendet.

In allen diesen Fällen ist eine feste Haftung der nachfolgenden Beschichtungen auf der Passivierungs- bzw. Phosphatschicht von erheblicher Wichtigkeit. Diese feste Haftung ist unabdingbar, um dort, wo beispielsweise durch Steinschlag mechanische Beschädigungen der Beschichtung auftreten, ein Eindringen von Elektrolyt und Sauerstoff wirksam zu verhindern, damit die sogenannte Filiformkorrosion nicht auftritt. Filiformkorrosion ist eine Korrosionsart, die beispielsweise bei Stahl oder Aluminium unter organischen Schichten auftritt. Charakteristisch hierfür ist eine fadenförmige Unterwanderung. Sie wird normalerweise durch eine Fehlerstelle oder einen Kratzer in der Schicht verursacht. Eine feste Haftung zwischen Beschichtung und Metall muss auch deswegen gewährleistet sein, damit bei weiteren Verarbeitungsschritten wie dem Bördeln oder Biegen kein Abplatzen der Beschichtung auftritt, was ebenfalls zu anschließender Filiformkorrosion führen würde.

Aus der EP 1 130 066 A1 ist ein extrusionsbeschichtetes Metallprofil bekannt, bei dem eine Organosilanzusammensetzung als Haftgrundlage für eine aufextrudierte Schicht aus einer Polyamidformmasse dient.

Aus der WO 2009/027429 ist die Verwendung eines metallischen Leitungsrohres, dessen Oberfläche mit einer Polyamidschicht umhüllt ist, zur Herstellung einer grabenlos bzw. sandbettfrei verlegten Rohrleitung bekannt. Die WO 2010/094528 offenbart die Verwendung eines metallischen Leitungsrohrs, das mit einer extrudierten Schicht aus einer Polyamidformmasse umhüllt ist, zur Herstellung einer im Wasser verlegten Rohrleitung.

In der US 5 520 223 ist ein verzinktes Metallrohr beschrieben, dessen Oberfläche nach einer Vorbehandlung mit einer Formmasse auf Basis von thermoplastischen Elastomeren, lonomeren, Polyamiden und/oder Fluorpolymeren beschichtet wird.

Bei diesem Stand der Technik leistet das Beschichtungsmaterial nur einen passiven Beitrag zum Korrosionsschutz, indem der Zutritt von Wasser bzw. Salzwasser und Luftsauerstoff behindert wird. Allerdings ist eine Diffusion von Luftsauerstoff durch die Beschichtung nach wie vor möglich.

Die US 2011/0200818 A1 beschreibt ein doppelbindungshaltiges, zweikomponentiges Oberflächenbeschichtungsmaterial auf Polyurethanbasis, das durch Strahlung vernetzt werden kann. In der WO 03/102095 A1 wird ein lufttrocknender und mit aktinischer Strahlung härtbarer Beschichtungsstoff offenbart, der ein Alkydharz sowie ein olefinisch ungesättigtes Monomer enthält. Die US 5 686 535 beschreibt ein niedermolekulares, funktionalisiertes Blockcopolymer auf Basis eines konjugierten Diens, das als Klebstoff, Beschichtung oder Versiegelungsmasse verwendet wird. Aus der DE 60225144 T2 (EP 1417272 B1) sind strahlungshärtbare Pulverbeschichtungszusammensetzungen bekannt, die ein ethylenisch ungesättigtes Harz enthalten.

Ausgehend vom Stand der Technik sollte eine Polymerzusammensetzung für die Beschichtung von Metallgegenständen zur Verfügung gestellt werden, die sowohl zu unbehandelten als auch zu behandelten Metalloberflächen eine verbesserte Haftung aufweist und die gleichzeitig einen aktiven Beitrag zum Korrosionsschutz leistet.

Überraschenderweise wurde gefunden, dass diese Aufgabe gelöst wird, wenn die Polymerzusammensetzung olefinische Doppelbindungen enthält. Die olefinischen Doppelbindungen können im Polymer oder in einer zugesetzten ungesättigten Verbindung enthalten sein.

In der allgemeinsten Form ist der Gegenstand der Erfindung daher ein Verfahren gemäß Anspruch 1 zur Herstellung eines beschichteten Metallgegenstands, bei dem die Metalloberfläche mit einer Zusammensetzung beschichtet wird, die ein Polymer und eine ungesättigte Verbindung enthält, wobei die Zusammensetzung 70 - 2700 mäq/kg, bevorzugt 140 - 1800 mäq/kg und besonders bevorzugt 350 - 1350 mäq/kg olefinische Doppelbindungen enthält.

Gegenstand der Erfindung ist ferner ein beschichteter Metallgegenstand gemäß Anspruch 4, der dadurch hergestellt ist, dass die Metalloberfläche mit einer Zusammensetzung beschichtet wurde, die ein Polymer und eine ungesättigte Verbindung enthält, wobei die Zusammensetzung 70 - 2700 mäq/kg, bevorzugt 140 - 1800 mäq/kg und besonders bevorzugt 350 - 1350 mäq/kg olefinsche Doppelbindungen enthält.

Gegenstand der Erfindung ist somit ein Verfahren zur Herstellung eines beschichteten Metallgegenstandes, gekennzeichnet durch folgenden Schritt:
- Beschichten einer Metalloberfläche mit einer Zusammensetzung, die folgende Komponenten enthält:
   a) Ein Polymer gemäß Anspruch 1 sowie
   b) eine ungesättigte Verbindung, die olefinische Doppelbindungen enthält, ein zahlenmittleres Molekulargewicht Mₙ, ermittelt durch Dampfdruckosmometrie, von maximal 38000 g/mol und vorzugsweise von maximal 34000 g/mol besitzt und in einer solchen Menge enthalten ist, dass die Zusammensetzung 70 - 2700 mäq/kg, bevorzugt 140 - 1800 mäq/kg und besonders bevorzugt 350 - 1350 mäq/kg dieser Doppelbindungen enthält,
   mit der zusätzlichen Maßgabe gemäß Anspruch 1.

Gegenstand der Erfindung ist ferner ein beschichteter Metallgegenstand, der dadurch hergestellt ist, dass die Metalloberfläche mit einer Zusammensetzung beschichtet wurde, die folgende Komponenten enthält:
a) Ein Polymer gemäß Anspruch 1 sowie
b) eine ungesättigte Verbindung, die olefinische Doppelbindungen enthält, ein zahlenmittleres Molekulargewicht Mₙ, ermittelt durch Dampfdruckosmometrie, von maximal 38000 g/mol und vorzugsweise von maximal 34000 g/mol besitzt und in einer solchen Menge enthalten ist, dass die Zusammensetzung 70 - 2700 mäq/kg, bevorzugt 140 - 1800 mäq/kg und besonders bevorzugt 350 - 1350 mäq/kg dieser Doppelbindungen enthält,
mit der zusätzlichen Maßgabe gemäß Anspruch 4.

Der mit der anspruchsgemäßen Zusammensetzung zu beschichtende Metallgegenstand kann prinzipiell aus jedem Metall bestehen. Beispiele hierfür sind Stahl, Edelstahl, Kupfer, Aluminium, Gusseisen, Messing, Zink, Legierungen mit einem dieser Metalle als Hauptbestandteil, verzinkter Stahl, cadmierter Stahl, aluminiumbeschichtetes Metall oder mit Metalllegierungen wie z. B. GALFAN beschichteter Stahl. Bevorzugt werden Metallgegenstände beschichtet, deren Oberfläche aus Stahl, Zink oder einer Legierung mit dem Hauptbestandteil Aluminium, Eisen oder Zink besteht.

Die Oberfläche des zu beschichtenden Metallgegenstands kann einer Vorbehandlung zum Korrosionsschutz unterzogen werden, beispielweise einer der eingangs erwähnten Methoden zur Passivierung bzw. Phosphatierung. Ebenso kann der Einsatz von komplexierend wirkenden Polymeren ausgewählt aus der Gruppe, die aus Polyacrylaten, Copolymeren aus α-Olefinen und Acrylaten, Polyethern und Mischungen dieser Polymere besteht, eine wirksame Unterstützung im Korrosionsschutz darstellen. Es ist jedoch auch möglich, einen Metallgegenstand mit unbehandelter Oberfläche zu beschichten. Gegebenenfalls kann die Oberfläche auch durch Strahlen, z. B. Sandstrahlen, vorbehandelt werden.

Obwohl es bevorzugt ist, beim erfindungsgemäßen Verfahren auf eine Chromatierung zu verzichten, die Chrom(VI)-haltige Chromatschichten ergibt, kann in einer weiteren Ausführungsform auch eine chromatierte Metalloberfläche mit der anspruchsgemäßen Zusammensetzung beschichtet werden. Darüber hinaus kann die Metalloberfläche vor der Behandlung mit der anspruchsgemäßen Zusammensetzung auch auf jede andere bekannte Weise vorbehandelt werden, wie beispielsweise in der US 5 520 223 beschrieben.

Zum Erzielen einer festen Haftung ist, abgesehen von der eben genannten optionalen Vorbehandlung, der Einsatz eines zusätzlichen Haftvermittlers nicht nötig. Vorzugsweise wird daher auf die gegebenenfalls vorbehandelte Metalloberfläche kein zusätzlicher Haftvermittler aufgebracht. Es liegt jedoch im Rahmen der Erfindung, im Einzelfall zusätzlich einen Haftvermittler wie beispielsweise ein Epoxidharz oder ein funktionalisiertes Polyolefin aufzutragen, wenn hierdurch anwendungstechnische Vorteile erzielt werden.

Der zu behandelnde Metallgegenstand kann jede beliebige Form haben. Er kann beispielsweise ein Blech, eine Platte, ein Gehäuse oder ein Profil wie etwa ein Rohr sein.

Das Polymer der anspruchsgemäßen Zusammensetzung ist ausgewählt aus der Gruppe bestehend aus Polyvinylchlorid sowie Fluorpolymere. Hierbei sind Polyamide bevorzugt.

Das erfindungsgemäß verwendbare Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA46, PA6, PA66 oder Copolyamide auf dieser Basis mit Einheiten, die sich von Terephthalsäure und/oder Isophthalsäure herleiten (im Allgemeinen als PPA bezeichnet). In einer bevorzugten Ausführungsform enthalten die Monomereinheiten im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombinationen PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer möglichen Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Bevorzugt hat das Polyamid ein Molekulargewicht Mₙ von größer als 5000, insbesondere von größer als 8000. Hierbei werden vorzugsweise Polyamide eingesetzt, deren Endgruppen zumindest teilweise als Aminogruppen vorliegen, da hierdurch die Haftung verbessert wird. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4- oder 1.3-Dimethylaminocyclohexan, 4.4'-Diaminodicyclohexylmethan, 4.4'-Diamino-3.3'-dimethyldicyclohexylmethan, 4.4'-Diaminodicyclohexylpropan, Isophorondiamin, Metaxylylendiamin oder Paraxylylendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Es hat sich herausgestellt, dass die Haftung zur Metalloberfläche noch weiter verbessert wird, wenn die Zusammensetzung neben Polyamid und ungesättigter Verbindung weitere Zusätze enthält, die ausgewählt sind aus:
- Oxazolinen wie z.B. 2-Ethyl-2-oxazolin, 2-Phenyl-2-oxazolin, 2-Isopropenyl-2-oxazolin, 2-Ethyl-4-methyl-2-oxazolin, 2-Phenyl-4-ethyl-2-oxazolin, 2-Phenyl-4-methyl-2-oxazolin. Die Oxazoline können alleine oder als Mischung eingesetzt werden. Bezogen auf die Polyamidzusammensetzung werden 0,05 bis 10 Gew.-% und bevorzugt 0,1 bis 5 Gew.-% verwendet.
- Bisoxazolinen wie z.B. 2.2'-Methylen-bis(2-oxazolin), 2.2'-Ethylen-bis(2-oxazolin), 2.2'-Ethylen-bis(4-methyl-2-oxazolin), 2.2'-Propylen-bis(2-oxazolin), 2.2'-Tetramethylen-bis(2-oxazolin), 2.2'-Hexamethylen-bis(2-oxazolin), 2.2'-Octamethylen-bis(2-oxazolin), 2.2'-p-Phenylen-bis(2-oxazolin), 2.2'-m-Phenylen-bis(2-oxazolin), 2.2'-o-Phenylen-bis(2-oxazolin), 2.2'-p-Phenylen-bis(4-methyl-2-oxazolin), 2.2'-m-Phenylen-bis(4-methyl-2-oxazolin), 2.2'-o-Phenylen-bis(4-methyl-2-oxazolin), 2.2'-p-Phenylen-bis(4-phenyl-2-oxazolin), 2.2'-m-Phenylen-bis(4-phenyl-2-oxazolin), 2.2'-o-Phenylen-bis(4-phenyl-2-oxazolin), 2.2'-Bis(2-oxa-zolin), 2.2'-Bis(4-methyl-2-oxazolin), 2.2'-Bis(4-ethyl-2-oxazolin), 2.2'-Bis(4-phenyl-2-oxazolin). Diese Bisoxazoline können alleine oder als Mischung eingesetzt werden. Bezogen auf die Polyamidzusammensetzung werden 0,05 bis 10 Gew.-% und bevorzugt 0,1 bis 5 Gew.-% verwendet.
- Polyoxazolinen, die durch kationische ringöffnende Polymerisation von Oxazolinen, z.B. der oben genannten Verbindungen, hergestellt werden können. Bezogen auf die Polyamidzusammensetzung können 0,05 bis 10 Gew.-% und bevorzugt 0,1 bis 5 Gew.-% eingesetzt werden.
- Bifunktionellen Epoxiden wie z.B. Bisphenoldiglycidylether oder einem Epoxidharz mit einer Epoxidfunktionalität von mindestens 2. Eine Vielzahl entsprechender Verbindungen ist kommerziell erhältlich. Auch hier werden, bezogen auf die Polyamidzusammensetzung, 0,05 bis 10 Gew.-% und bevorzugt 0,1 bis 5 Gew.-% eingesetzt.
- Haftharzen auf Basis von Acetophenon-Formaldehyd-Harzen oder Cyclohexanon-Formaldehyd-Harzen. Auch hier ist eine Vielzahl entsprechender Verbindungen kommerziell erhältlich. Die eingesetzten Mengen, bezogen auf die Polyamidzusammensetzung, bewegen sich ebenfalls im Bereich von 0,05 bis 10 Gew.-% und bevorzugt von 0,1 bis 5 Gew.-%.

Diese Zusätze sind hinsichtlich Haftungsverbesserung besonders effizient, wenn mindestens 50 % der Endgruppen des Polyamids als Aminogruppen vorliegen.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-Vinylacetat-Copolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch.

Das Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein.

Neben Polymer, ungesättigter Verbindung sowie den obengenannten Zusätzen kann die Zusammensetzung weitere Komponenten enthalten wie z. B. Schlagzähmodifikatoren, andere Thermoplaste, Weichmacher, Pigmente, faserförmige Verstärkungsstoffe, Flammschutzmittel, Verarbeitungshilfsmittel und Stabilisatoren.

Die anspruchsgemäß verwendete ungesättigte Verbindung enthält olefinische Doppelbindungen; diese haben einen doppelten Effekt. Zum einen verbessern sie die Haftung zur Metalloberfläche; zum anderen sind sie reaktiv gegenüber korrosionsfördernden Verbindungen wie Sauerstoff. Dadurch wird eindiffundierender Sauerstoff durch die Doppelbindungen abgefangen und gelangt somit nicht mehr an die Grenzfläche von Polymer zu Metall bzw. Korrosionsschutzschicht. Hierbei ist es vorteilhaft, wenn die Doppelbindungen ausreichend nucleophil sind. Sie tragen in einer bevorzugten Ausführungsform keine Substituenten, welche einen -M-Effekt oder einen -I-Effekt bewirken, der einen eventuell gleichzeitig vorhandenen +M-Effekt überwiegt. Typische derartige Substituenten sind beispielsweise Carbonsäureestergruppen, Nitrilgruppen oder Chlor.

Das Molekulargewicht der ungesättigten Verbindung ist nach oben hin begrenzt. Der Grund hierfür ist, dass die ungesättigte Verbindung eine ausreichende Mobilität aufweisen muss. Somit wird sichergestellt, dass ein ausreichender Teil der Doppelbindungen für die Anbindung an die Metalloberfläche zur Verfügung steht. In einer Ausgestaltung der Erfindung ist das Polymer ein Polyamid, wobei maximal 80 Gew.-% der ungesättigten Verbindung, vorzugsweise maximal 60 Gew.-% der ungesättigten Verbindung, besonders bevorzugt maximal 40 Gew.-% der ungesättigten Verbindung und insbesondere bevorzugt maximal 20 Gew.-% der ungesättigten Verbindung eine funktionelle Gruppe tragen, die zur Anbindung an das Polyamid fähig ist. Derartige funktionelle Gruppen sind beispielsweise Carbonsäureanhydrid-, Carbonsäure-, Epoxid-, Oxazinon-, Isocyanat- oder Carbodiimidgruppen. Durch diese Maßnahme wird zusätzlich eine ausreichende Mobilität der ungesättigten Verbindung gewährleistet. In vielen Fällen kommen die Vorteile der Erfindung besonders gut zum Tragen, wenn die ungesättigte Verbindung keine funktionellen Gruppen enthält.

Die Mobilität der ungesättigten Verbindung darf andererseits nicht so hoch sein, dass sie einen so hohen Dampfdruck besitzt, dass sie sich im Laufe der Zeit verflüchtigt. Aus diesem Grunde beträgt das zahlenmittlere Molekulargewicht Mₙ der ungesättigten Verbindung bevorzugt mindestens 200 g/mol, besonders bevorzugt mindestens 300 g/mol und insbesondere bevorzugt mindestens 400 g/mol.

Das zahlenmittlere Molekulargewicht wird durch Dampfdruckosmometrie bestimmt. Man verwendet hierzu das Vapor Pressure Osmometer K-7000 der Firma Wissenschaftlicher Gerätebau Dr. Ing. Herbert Knauer GmbH, Berlin, Deutschland und arbeitet gemäß dem hierfür erhältlichen Handbuch in der Fassung 03/2007. Selbstverständlich kann auch jedes andere Gerät verwendet werden, das nach der gleichen Methode misst und zu gleichen Ergebnissen gelangt.

Als ungesättigte Verbindung können beispielsweise folgende Substanzklassen eingesetzt werden:
- Polyalkenylene;
- Ester ungesättigter Carbonsäuren;
- Ester ungesättigter Alkohole;
- Polymere, deren Monomerbausteine sich zumindest teilweise von Dienen herleiten.

Polyalkenylene sind aus wiederkehrenden Einheiten der Formel 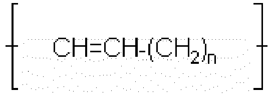 mit n = 3 bis 10 aufgebaut. Sie werden meist durch ringöffnende Polymerisation von Cycloolefinen in Gegenwart eines Metathesekatalysators hergestellt. Geeignete Polymere sind z. B. Polypentenylen, Polyhexenylen, Polyheptenylen, Polyoctenylen, Polynonenylen, Polydecenylen, Poly(3-methyloctenylen), Poly(3-methyldecenylen), Polyundecenylen oder Polydodecenylen. Polyalkenylene werden gelegentlich auch als Polyalkenamere bezeichnet und die zugehörigen Polymeren als Polypentenamer, Polyhexenamer, Polyheptenamer, Polyoctenamer usw.

Die Herstellung von Polypentenylen ist beispielsweise in US 3 607 853 beschrieben. Polyhexenylen wird durch alternierende Copolymerisation von Butadien und Ethen hergestellt. Die Herstellung von Polyheptenylen geschieht durch Metathese von Cyclohepten (z. B. US 4 334 048) und diejenige von Polyoctenylen durch Metathese von Cyclocten (A. Dräxler, Kautschuk + Gummi, Kunststoff 1981, Seiten 185 bis 190). Die höheren Polyalkenylene werden entsprechend hergestellt. Im Rahmen der Erfindung können auch gemischte Polyalkenylene, d. h. Copolymere (US 3 974 092; US 3 974 094) oder Mischungen verschiedener Polyalkenylene eingesetzt werden.

Ester ungesättiger Carbonsäuren sind solche mit einem einwertigen oder mehrwertigen Alkohol, beispielsweise Methylester, Ethylenglykolmono- oder-diester, Glycerinmono-, -di- oder -triester sowie entsprechende Ester von Neopentylglykol oder Sorbit mit Ölsäure, Linolensäure, Elaidinsäure, Undecylensäure, Erucasäure, Linolsäure, Arachidonsäure und dergleichen. Als Ester ungesättigter Carbonsäuren können auch natürliche Öle eingesetzt werden.

Ester ungesättigter Alkohole leiten sich von Mono-, Oligo- oder Polycarbonsäuren her; als ungesättigter Alkohol können beispielsweise Allylalkohol, Crotylalkohol, Oleylalkohol und dergleichen eingesetzt werden. Ein Beispiel hierfür ist das partielle oder vollständige Umesterungsprodukt, das aus Polymethylacrylat oder Polymethylmethacrylat und einem ungesättigten Alkohol wie Allylalkohol, Crotylalkohol, Oleylalkohol oder dergleichen erhalten werden kann. Derartige Polyacrylate weisen eine gute Verträglichkeit beispielsweise auch mit Fluorpolymeren auf.

Polymere, deren Monomerbausteine sich zumindest teilweise von Dienen herleiten, sind beispielsweise Polybutadien, Polyisopren (in beiden Fällen mit cis-1,4-, trans-1,4-, 1,2-Verknüpfung oder Mischungen hiervon), Styrol-Butadien-Kautschuk, Styrol-Butadien-Blockcopolymere wie SB oder SBS oder Ethylen/C₃- bis C₁₂-α-Olefin/unkonjugiertes Dien-Terpolymere mit 20 bis 96, bevorzugt 25 bis 85 Gew.-% Ethylen und bis maximal etwa 12 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind beispielsweise Propen, 1-Buten, 1-Penten, 1-Hexen, 1-Octen, 1-Decen oder 1-Dodecen geeignet; Beispiele hierfür sind Ethylen-Propylen-Dien-Kautschuk (EPDM) sowie Ethylen-Butylen-Dien-Kautschuk. Nitrilkautschuk und insbesondere Chloroprenkautschuk sind weniger gut geeignet, da die Doppelbindungen dem -I-Effekt der Nitrilgruppen bzw. der Chloratome ausgesetzt sind und ihre Reaktivität darunter leidet. Derartige Polymere sollten in ausreichend niedermolekularer Form, beispielsweise als Polybutadienöl oder zumindest mit einem zahlenmittleren Molekulargewicht Mₙ von maximal 38000 g/mol eingesetzt werden. Liegt Mₙ über dieser Grenze, so können diese Polymere trotzdem mit verwendet werden, aber nur in Mischung mit einer ausreichend niedermolekularen Verbindung wie z. B. Polyoctenylen, Polybutadienöl oder Leinöl. Da das anspruchsgemäße zahlenmittlere Molekulargewicht Mₙ den Mittelwert über alle in der Zusammensetzung enthaltenen ungesättigten Verbindungen darstellt, kann ein zu hohes Mₙ durch Strecken mit einer niedermolekularen ungesättigten Verbindung unter die anspruchsgemäße Grenze gebracht werden.

Im Falle der Verwendung von Polyamid als Komponente gemäß a) ist darüber hinaus zu berücksichtigen, dass die oben genannten Kautschuke mit dem Polyamid unverträglich sind. Handelsübliches EPDM beispielsweise hat generell ein zahlenmittleres Molekulargewicht Mₙ deutlich oberhalb der anspruchsgemäßen Grenze. Dies und der unpolare Charakter führt dazu, dass Polyamid und EPDM keine stabile Mischung ergeben. Der Auftrag einer solchen Mischung auf eine Metalloberfläche kann zwar durchaus zu einer Wechselwirkung zwischen Doppelbindungen und Metalloberfläche führen, soweit EPDM-Domänen in Kontakt mit dem Metall geraten; die Zusammensetzung delaminiert aber bei der kleinsten mechanischen Belastung, da eine Phasenhaftung zwischen EPDM und Polyamid praktisch nicht vorhanden ist. Um dem abzuhelfen, setzt man bei der Herstellung von Polyamid-EPDM-Blends grundsätzlich ein EPDM ein, das funktionelle Gruppen trägt, beispielsweise Carbonsäureanhydridgruppen, die durch Reaktion mit Maleinsäureanhydrid oder Fumarsäure eingebracht werden können. Dies hat zur Folge, dass in einem derartigen Blend das EPDM in der Polyamidmatrix dispergiert ist. Die EPDM-Domänen sind hierbei von Polyamid umhüllt. Sie sind daher nicht mehr in der Lage, mit der Metalloberfläche in Wechselwirkung zu treten. Gleiches gilt im Übrigen auch für andere Kautschuke wie z. B. Nitrilkautschuk. In solchen Fällen können die Doppelbindungen des Kautschuks alleine der Funktion als Sauerstofffänger nachkommen. Erfindungsgemäß setzt man daher in solchen Fällen zusätzlich eine niedermolekulare ungesättigte Verbindung zu, die ausreichend mobil ist und mit der Metalloberfläche in Wechselwirkung tritt.

Besonders bevorzugt ist der Einsatz eines Polyalkenylens und hier insbesondere eines Polyoctenylens als ungesättigte Verbindung. Geeignete Polyoctenylene sind unter der Handelsbezeichnung VESTENAMER^{®} kommerziell erhältlich. In einer Weiterbildung hiervon wird ein Polyalkenylen, insbesondere Polyoctenylen, zusammen mit einem Kautschuk, der mit Carbonsäureanhydridgruppen funktionalisiert ist, beispielsweise EPM oder EPDM und der als Schlagzähmodifier dient, sowie Polyamid als Komponente gemäß a) eingesetzt. Aus der EP 0 243 595 A2 ist bekannt, dass Polyalkenylene mit Polymeren, die die Schlagzähigkeit verbessern, in Polyamidformmassen synergistische Effekte hinsichtlich der Kerbschlagzähigkeit ergeben.

Die erfindungsgemäß eingesetzte Zusammensetzung wird durch Mischen der Komponenten in der Schmelze hergestellt.

Die Zusammensetzung kann auf die Metalloberfläche nach allen Methoden des Standes der Technik aufgebracht werden, beispielsweise mittels Extrusion, Aufbringen eines Tapes mit gleichzeitiger Aufheizung, etwa mit Hilfe von Heißluft, mittels Pulversprühverfahren oder Pulvertauchverfahren. Beim Beschichten liegt die Temperatur der Metalloberfläche üblicherweise im Bereich von 10 °C bis 300 °C in Abhängigkeit vom gewählten Beschichtungsverfahren.

Das Verfahren der Extrusionsbeschichtung ist wie die anderen obengenannten Verfahren Stand der Technik. Bezüglich Einzelheiten sei beispielsweise verwiesen auf F. Hensen, W. Knappe, H. Potente (Hrsg.), Handbuch der Kunststoff-Extrusionstechnik, Band II, Hanser Verlag München Wien 1986, Seiten 321 bis 353.

Die Extrusionsgeschwindigkeit sollte der Konzentration der in der Zusammensetzung vorhandenen Doppelbindungen angepasst sein. So erlauben Zusammensetzungen mit einem geringen Doppelbindungsanteil nur verhältnismäßig geringe Extrusionsgeschwindigkeiten, um eine hohe Haftung zu erzielen. Zusammensetzungen mit einem hohen Doppelbindungsanteil erlauben hingegen höhere Extrusionsgeschwindigkeiten. Der Doppelbindungsanteil der Zusammensetzung kann durch Variation von Art und Menge der ungesättigten Verbindung eingestellt werden.

Auf die Schicht mit der anspruchsgemäßen Zusammensetzung können bei Bedarf noch eine oder mehrere weitere Polymerschichten aufgetragen werden. Dies kann durch eine nachträgliche Extrusionsbeschichtung geschehen, wobei gegebenenfalls ein Haftvermittler zusätzlich aufgetragen werden kann, oder zusammen mit der anspruchsgemäßen Schicht mittels Coextrusion. Geeignete Polymere sind z. B. thermoplastische Elastomere, lonomere aus Ethylen-Methacrylsäure-Copolymeren, Fluorpolymere wie beispielsweise Fluorkautschuk, andere Kautschuke, die gegebenenfalls Füllstoffe, Weichmacher sowie ein Vulkanisationssystem enthalten können, oder Ethylenhomo- bzw. -copolymere. Geeignete Polymere sind in der US 5 520 223 näher beschrieben. Mit derartigen Schichten kann das Rohr etwa vor mechanischen Einwirkungen wie zum Beispiel Steinschlag noch besser geschützt werden.

Gemäß der Erfindung wird eine hervorragende und dauerhafte Haftung der Beschichtung an der Metalloberfläche erzielt. Zudem wird ein verbesserter Korrosionsschutz erhalten. Insbesondere in stark korrosiver Umgebung wird daher eine signifikant erhöhte Lebensdauer des erfindungsgemäßen Bauteils erzielt.

Ein weiterer Vorteil der Erfindung besteht darin, dass hiermit Fehler in einer bestehenden Beschichtung, etwa an beschädigten Stellen oder an Schweißnähten, effizient ausgebessert werden können. Hierzu kann man eine entsprechende Zusammensetzung beispielsweise aufsprühen (etwa ein 2K-Polyurethansystem) oder einen Flicken oder ein Tape unter gleichzeitiger Aufheizung applizieren beziehungsweise mit einem schmelzeaufbringenden Verfahren arbeiten, etwa mit Hilfe eines Extrusionsschweißgeräts. Auf diese Weise können beschädigte Beschichtungssysteme auch auf Baustellen oder auf hoher See mit artverwandten Materialien repariert werden.

In einer ersten Ausführungsform wird die Erfindung im Kraftfahrzeugbau oder im Maschinenbau verwendet. Der beschichtete Metallgegenstand ist dann Teil eines Kraftfahrzeugs oder einer Maschine, beispielsweise eine Kraftstoffleitung, eine Servolenkungsleitung, eine Kühlflüssigkeitsleitung, eine Bremsleitung oder eine Klimaanlagenleitung.

In einer zweiten Ausführungsform ist der beschichtete Metallgegenstand eine Transportleitung, eine Verteilungsleitung, eine Hausanschlussleitung oder eine Ver- oder Entsorgungsleitung. Er dient dann beispielsweise dem Transport von Fernwärme, Frischwasser, Abwasser, Gas, Luft, Ölen wie beispielweise Rohöl, Leichtöl oder Schweröl, Kraftstoffen wie beispielsweise Kerosin oder Diesel, Petrochemikalien, Sole, Laugen, abrasiven Medien, Berge- oder Verpressmaterialien oder Stäuben.

In einer dritten Ausführungsform ist der beschichtete Metallgegenstand ein Stahlkonstruktionsteil für ein Offshore-Bauwerk. Als Offshore-Bauwerk werden feststehende Bauwerke bezeichnet, die in der offenen See vor der Küste errichtet werden. Beispiele für derartige Offshore-Bauwerke sind Windenergieanlagen, Bohrinseln und Leuchttürme. Vorzugsweise ist der erfindungsgemäße beschichtete Metallgegenstand in diesem Fall ein Stahlkonstruktionsrohr in der Gründungsstruktur derartiger Offshore-Bauwerke. Die Gründungsstruktur von Offshore-Bauwerken ist der Bereich, der die eigentliche Funktionseinheit trägt. Bei Windenergieanlagen trägt die Gründungsstruktur den Turm einschließlich Turbine und Rotoren. Bei Bohrinseln trägt die Gründungsstruktur die Plattform einschließlich Aufbauten. Bei Leuchttürmen trägt die Gründungsstruktur den Turm, soweit vorhanden, sowie das Feuer. Die Gründungsstruktur liegt unter Wasser, in der Wechselwasserzone, in der Gischtzone sowie gegebenenfalls in der Aerosolzone. Die Gründungsstruktur schließt die Gründungselemente ein, mit denen sie im Meeresboden verankert ist.

Die Gründungsstruktur einer Offshore-Windenergieanlage erstreckt sich von den Gründungselementen, die im Meeresboden verankert sind, über die Struktur, die sich unter Wasser befindet, bis zu der Stelle, an der der Turm ansetzt und die sich oberhalb des Ruhewasserspiegels befinden kann.

Als Gründungsstruktur werden beispielsweise folgende Typen verwendet:
Die Monopile-Konstruktion besteht aus einem zylindrischen hohlen Pfahl. Das Monopile wird in vielen europäischen Offshore-Windparks in Küstennähe verwendet; es eignet sich für Fundamente in Wassertiefen bis zu etwa 20 Metern. Monopiles können einfach und schnell installiert werden; für die Errichtung werden jedoch schwere Rammgeräte benötigt. Mittlerweile werden Versuche einer schonenden Installation mit Bohrkopf durchgeführt.

Das Jacket ist eine Fachwerkskonstruktion aus Stahl, die der Konstruktion von üblichen Strommasten ähnelt. An seinen vier Füßen wird das Jacket mit Pfählen im Meeresboden verankert. Die Jacketkonstruktion hat sich bereits in der Ölindustrie in größeren Wassertiefen bewährt. Durch die Fachwerkskonstruktion lassen sich gegenüber dem Monopile 40 bis 50 % Stahl einsparen. So steigen die Projektkosten beim Einsatz dieser Konstruktion in größeren Wassertiefen nur relativ gering an. Da die einzelnen Bauelemente relativ klein sind, lassen sie sich leicht produzieren und können einfach transportiert und montiert werden.

Beim Tripod besteht die Struktur aus einem aus Stahlrohren gebildeten Dreibein, auf dem das Zentralrohr zentrisch aufgesetzt wird. Die Beine des Dreibeins können auf je einem Pfahl oder auch auf mehreren aufsitzen. Zur Pfahlrammung sind an den Eckpunkten des sich ergebenden gleichseitigen Dreiecks Zentrierhülsen angeordnet. Die Pfähle sind untereinander durch horizontale Streben verbunden und an das Zentralrohr über diagonale Abstrebungen angeschlossen. Das Zentralrohr bindet nicht in den Meeresboden ein. Da hier Stahlrohre mit kleineren Durchmessern verwendet werden, kann das Tripod für Wassertiefen von mehr als 20 Metern eingesetzt werden.

Beim Quadropod handelt es sich um eine Modifikation des Tripod-Konzepts mit vier statt drei Verstrebungen. Hierbei wird eine erhöhte Gründungssteifigkeit bei großen Wassertiefen erzielt.

Das Tripile besteht aus drei Stahlpfeilern, die unter Wasser verankert werden. Über Wasser wird auf diesen Stahlpfeilern eine Dreibeinkonstruktion aufgesetzt. Nach Herstellerangaben sind Tripile-Fundamente für Wassertiefen von 25 bis zu 50 Metern geeignet.

Derartige Konstruktionen werden beispielsweise in folgenden Publikationen beschrieben:
- Fundamente für Offshore-Windenergieanlagen, Deutsche Energie-Agentur GmbH, Stand 12/09;
- Florian Biehl, Kollisionssicherheit von Offshore-Windenergieanlagen, Stahlbau, Band 78 (6), S. 402 - 409 (2009);
- K. Lesny, W. Richwien (Herausgeber), Gründung von Offshore-Windenergieanlagen - Werkzeuge für Planung und Bemessung, VGE Verlag Glückauf 2008, ISBN: 978-3-86797-035-8;
- DE 103 10 708 A1.

Hinsichtlich weiterer Details hierzu sei auf den Inhalt der EP 2 511 430 verwiesen.

In einer vierten Ausführungsform ist der erfindungsgemäße beschichtete Metallgegenstand ein Konstruktionsteil eines Schiffes oder Bootes.

Diese Ausführungsformen sind nicht limitierend; der erfindungsgemäße beschichtete Metallgegenstand kann selbstverständlich darüber hinaus auch andere geeignete Verwendungen finden.

Die Erfindung soll nachfolgend beispielhaft erläutert werden.

In den Beispielen wurden folgende Materialien verwendet:
- **PA1:**: VESTAMID^{®} L2101, eine hochviskose PA12-Extrusionsformmasse mit einem Überschuss an Carboxylendgruppen;
- **PA2:**: VESTAMID^{®} ZA4487, ein ungeregeltes, niedrigviskoses PA12 mit einem ausgeglichenen Verhältnis an Carboxyl- und Aminoendgruppen;
- **PA3:**: VESTAMID^{®} ZA7295, ein hochviskoses PA12 mit einem Überschuss an Aminoendgruppen;
- **PA4:**: VESTAMID^{®} D18, ein mittelviskoses PA612 mit einem Überschuss an Carboxylendgruppen;
- **PA5:**: VESTAMID^{®} ZA7093, ein mittelviskoses PA612 mit einem Überschuss an Aminoendgruppen;
- **TOR 1:**: VESTENAMER^{®} 6213, ein Polyoctenylen mit einem Anteil an trans-ständigen Doppelbindungen von ca. 60 %;
- **TOR 2:**: VESTENAMER^{®} 8012, ein Polyoctenylen mit einem Anteil an trans-ständigen Doppelbindungen von ca. 80 %.

### Allgemeine Vorschrift für die Herstellung der Polymerzusammensetzung:

90 Gewichtsteile der Polyamide PA1 bis PA5 wurden bei 260 °C in einem Doppelschneckenextruder WP ZSK 30, 33D mit 10 Gewichtsteilen TOR 1 schmelzegemischt, über eine Schmelzefiltration mit einem Siebpacket von 25 mm gefahren und anschließend stranggepresst, in einem Wasserbad abgekühlt und granuliert.

Des Weiteren wurden die Polyamide PA3 und PA5 nach der gleichen Vorschrift mit TOR 2 schmelzegemischt.

### Extrusionsbeschichtung von Aluminiumrohren:

Die Aluminiumrohre wurden nach dem ALCOA-Verfahren (Literatur: Walter Brockmann, Stefan Emrich, Kleben und Dichten Jahrgang 44, 9/2000, Seite 40) gereinigt, anschließend mit einer Titansalzlösung benetzt (Granodine 1455 der Firma Henkel, Deutschland), im Luftstrom getrocknet, induktiv auf eine Temperatur von mindestens 240 °C aufgeheizt und mit den Polyamidformmassen der Beispiele 1 bis 7 beschichtet. Zum Vergleich wurden entsprechend auch Beschichtungen mit den Polyamiden PA1 bis PA5 durchgeführt (Vergleichsbeispiele 1 bis 5).

Anschließend wurde mittels eines Peeltests untersucht, ob Haftwerte von größer als 3 N/mm vorliegen, da derartige Haftwerte erreicht werden müssen, um beispielsweise beim Bördeln des Rohres ein Abplatzen der Polyamidbeschichtung zu verhindern. Dabei zeigten die Formmassen der Beispiele 1 bis 7 und die Polyamide der Vergleichsbeispiele 2, 3 und 5 Haftwerte von größer als 3 N/mm. Die Haftwerte der Polyamide PA1 und PA4 lagen unter 3 N/mm; diese wurden im anschließenden Salzsprühtest daher nicht mehr untersucht.

Beim Salzsprühtest wurde die Polyamidbeschichtung durch einen Schnitt zerstört. Der Schnitt wurde so geführt, dass anschließend die ungeschützte Aluminiumoberfläche der Umgebung ausgesetzt war. Die Schnittfläche wurde dann mit einer essigsauren Kochsalzlösung besprüht.

Nach jeweils 500 h und 1000 h wurden die Haftung und die Filiformkorrosion ermittelt. Die Polyamide PA2, PA3 und PA5 (Vergleichsversuche 2, 3 und 5) versagten schon nach 500 h im Salzsprühtest. Nach 1000 h versagten auch die Beschichtungen der Beispiele 1 und 4 (Unterschuss an Aminoendgruppen). Bei den Beschichtungen der Beispiele 2, 3, 5, 6 und 7 konnte auch nach 1000 h kein Haftungsverlust und keine Filiformkorrosion beobachtet werden.

Die Ergebnisse sind in der Tabelle 1 dargestellt.

**Tabelle 1: Beispiele 1 bis 7 (B1 bis B7) und Vergleichsversuche 1 bis 5 (VB 1 bis VB 5)**

| | **B1** | **B2** | **B3** | **B4** | **B5** | **B6** | **B7** | **VB1** | **VB2** | **VB3** | **VB4** | **VB5** |
|---|---|---|---|---|---|---|---|---|---|---|---|---|
| PA1 [Gew.-Teile] | 90 | | | | | | | 100 | | | | |
| PA2 [Gew.-Teile] | | 90 | | | | | | | 100 | | | |
| PA3 [Gew.-Teile] | | | 90 | | | 90 | | | | 100 | | |
| PA4 [Gew.-Teile] | | | | 90 | | | | | | | 100 | |
| PA5 [Gew.-Teile] | | | | | 90 | | 90 | | | | | 100 |
| TOR 1 [Gew.-Teile] | 10 | 10 | 10 | 10 | 10 | | | | | | | |
| TOR 2 [Gew.-Teile] | | | | | | 10 | 10 | | | | | |
| Haftwert größer 3 N/mm bestanden | + | + | + | + | + | + | + | - | + | + | - | + |
| Salzsprühtest 500 h bestanden | + | + | + | + | + | + | + | a) | - | - | a) | - |
| Salzsprühtest 1000 h bestanden | - | + | + | - | + | + | + | a) | a) | a) | a) | a) |

| | | | | | | | | | | | | |
|---|---|---|---|---|---|---|---|---|---|---|---|---|
| ^{a)} nicht geprüft | | | | | | | | | | | | |

## Patentansprüche

1. Verfahren zur Beschichtung eines Metallgegenstands, wobei die Metalloberfläche mit einer Zusammensetzung beschichtet wird, die ein Polymer enthält
**dadurch gekennzeichnet, dass** die Zusammensetzung folgende Komponenten enthält:
a) das genannte Polymer, ausgewählt aus der Gruppe bestehend aus Polyamiden, Polyvinylchlorid sowie Fluorpolymeren, und
b) eine ungesättigte Verbindung, die olefinische Doppelbindungen enthält, ein zahlenmittleres Molekulargewicht Mₙ, ermittelt durch Dampfdruckosmometrie, von maximal 38000 g/mol besitzt und in einer solchen Menge enthalten ist, dass die Zusammensetzung 70 - 2700 mäq/kg olefinische Doppelbindungen enthält,
mit der Maßgabe, dass dann, wenn das Polymer ein Polyamid ist und die Zusammensetzung zusätzlich einen Kautschuk enthält, dieser funktionelle Gruppen trägt und in der Matrix dispergiert ist.

2. Verfahren gemäß Anspruch 1,
**dadurch gekennzeichnet,**
**dass** die ungesättigte Verbindung ausgewählt ist aus der Gruppe bestehend aus Polyalkenylenen, Estern ungesättigter Carbonsäuren, Estern ungesättigter Alkohole sowie Polymeren, deren Monomerbausteine sich zumindest teilweise von Dienen herleiten.

3. Verfahren gemäß einem der Ansprüche 1 bis 2,
**dadurch gekennzeichnet,**
**dass** ein beschichteter Metallgegenstand hergestellt oder Fehler in der Beschichtung eines Metallgegenstands ausgebessert werden.

4. Beschichteter Metallgegenstand, der dadurch hergestellt ist, dass die Metalloberfläche mit einer Zusammensetzung beschichtet wurde, die ein Polymerenthält,
**dadurch gekennzeichnet,**
**dass** die Zusammensetzung folgende Komponenten enthält:
a) das genannte Polymer, ausgewählt aus der Gruppe bestehend aus Polyamiden, Polyvinylchlorid sowie Fluorpolymeren, sowie
b) eine ungesättigte Verbindung, die olefinische Doppelbindungen enthält, ein zahlenmittleres Molekulargewicht Mₙ, ermittelt durch Dampfdruckosmometrie, von maximal 38000 g/mol besitzt und in einer solchen Menge enthalten ist, dass die Zusammensetzung 70 - 2700 mäq/kg olefinische Doppelbindungen enthält,
wobei die gesamte Zusammensetzung 70 - 2700 mäq/kg olefinische Doppelbindungen enthält,
mit der Maßgabe, dass wenn das Polymer ein Polyamid ist und die Zusammensetzung zusätzlich einen Kautschuk enthält, dieser funktionelle Gruppen trägt und in der Matrix dispergiert ist.

5. Beschichteter Metallgegenstand gemäß Anspruch 4,
**dadurch gekennzeichnet,**
**dass** die ungesättigte Verbindung ausgewählt ist aus der Gruppe bestehend aus Polyalkenylenen, Estern ungesättigter Carbonsäuren, Estern ungesättigter Alkohole sowie Polymeren, deren Monomerbausteine sich zumindest teilweise von Dienen herleiten.

6. Beschichteter Metallgegenstand gemäß einem der Ansprüche 4 bis 5 beziehungsweise erhalten nach dem Verfahren des Anspruchs 3,
**dadurch gekennzeichnet,**
**dass** er Teil eines Kraftfahrzeugs oder einer Maschine ist.

7. Beschichteter Metallgegenstand gemäß einem der Ansprüche 4 bis 5 beziehungsweise erhalten nach dem Verfahren des Anspruchs 3,
**dadurch gekennzeichnet,**
**dass** er eine Transportleitung, eine Verteilungsleitung, eine Hausanschlussleitung oder eine Ver- oder Entsorgungsleitung ist.

8. Beschichteter Metallgegenstand gemäß einem der Ansprüche 4 bis 5 beziehungsweise erhalten nach dem Verfahren des Anspruchs 3,
**dadurch gekennzeichnet,**
**dass** er ein Stahlkonstruktionsteil für ein Offshore-Bauwerk oder ein Konstruktionsteil eines Schiffes oder Bootes ist.

## Claims

1. Method for coating a metallic article, the metal surface being coated with a composition which comprises a polymer,
**characterized in that** the composition comprises the following components:
a) the stated polymer, selected from the group consisting of polyamides, polyvinyl chloride and also fluoropolymers, and
b) an unsaturated compound which comprises olefinic double bonds, possesses a number-average molecular weight Mₙ, determined by vapour pressure osmometry, of not more than 38 000 g/mol and is present in an amount such that the composition comprises 70 - 2700 meq/kg olefinically double bonds,
with the proviso that, if the polymer is a polyamide and the composition further comprises a rubber, the latter carries functional groups and is dispersed in the matrix.

2. Method according to Claim 1,
**characterized**
**in that** the unsaturated compound is selected from the group consisting of polyalkenylenes, esters of unsaturated carboxylic acids, esters of unsaturated alcohols and also polymers whose monomer units derive at least partly from dienes.

3. Method according to either of Claims 1 to 2,
**characterized**
**in that** a coated metallic article is produced or defects in the coating of a metallic article are repaired.

4. Coated metallic article produced by coating the metal surface with a composition which comprises a polymer,
**characterized**
**in that** the composition comprises the following components:
a) the stated polymer, selected from the group consisting of polyamides, polyvinyl chloride and also fluoropolymers, and
b) an unsaturated compound which comprises olefinic double bonds, possesses a number-average molecular weight Mₙ, determined by vapour pressure osmometry, of not more than 38 000 g/mol and is present in an amount such that the composition comprises 70 - 2700 meq/kg olefinically double bonds,
where the overall composition comprises 70 - 2700 meq/kg olefinically double bonds,
with the proviso that, if the polymer is a polyamide and the composition further comprises a rubber, the latter carries functional groups and is dispersed in the matrix.

5. Coated metallic article according to Claim 4,
**characterized**
**in that** the unsaturated compound is selected from the group consisting of polyalkenylenes, esters of unsaturated carboxylic acids, esters of unsaturated alcohols and also polymers whose monomer units derive at least partly from dienes.

6. Coated metallic article according to either of Claims 4 to 5, or obtained by the method of Claim 3,
**characterized**
**in that** it is part of a motor vehicle or of a machine.

7. Coated metallic article according to either of Claims 4 to 5, or obtained by the method of Claim 3,
**characterized**
**in that** it is a transport line, a distribution line, a mains connection line or a supply or disposal line.

8. Coated metallic article according to either of Claims 4 to 5, or obtained by the method of Claim 3,
**characterized**
**in that** it is a steel construction component for an offshore construction, or a construction component of a ship or boat.

## Revendications

1. Procédé de revêtement d'un objet métallique, la surface métallique étant revêtue d'une composition qui contient un polymère, **caractérisé en ce que** la composition contient les composants suivants :
a) ledit polymère, choisi dans le groupe consistant en les polyamides, le poly(chlorure de vinyle) ainsi que des fluoropolymères, et
b) un composé insaturé, qui contient des doubles liaisons oléfiniques, présente une masse moléculaire moyenne en nombre Mₙ, déterminée par osmométrie à pression de vapeur, au maximum de 38 000 g/mol et est présent en une quantité telle que la composition contient 70 à 2 700 méq/kg de doubles liaisons oléfiniques,
à la condition que, quand le polymère est un polyamide et que la composition contient en outre un caoutchouc, ce dernier porte des groupes fonctionnels et soit dispersé dans la matrice.

2. Procédé selon la revendication 1, **caractérisé en ce que** le composé insaturé est choisi dans le groupe consistant en les polyalcénylènes, les esters d'acides carboxyliques insaturés, les esters d'alcools insaturés ainsi que les polymères dont les constituants monomères dérivent au moins partiellement de diènes.

3. Procédé selon l'une des revendications 1 à 2, **caractérisé en ce qu'**un objet métallique revêtu est fabriqué, ou que des défauts dans le revêtement d'un objet métallique sont réparés.

4. Objet métallique revêtu, **caractérisé en ce que** la surface métallique a été revêtue d'une composition qui contient un polymère, **caractérisée** en que la composition contient les composants suivants :
a) ledit polymère, choisi dans le groupe consistant en les polyamides, le poly(chlorure de vinyle) ainsi que les fluoropolymères, ainsi que
b) un composé insaturé, qui contient des doubles liaisons oléfiniques, présente une masse moléculaire moyenne en nombre Mₙ, déterminée par osmométrie à pression de vapeur, au maximum de 38 000 g/mol et est présent en une quantité telle que la composition contient 70 à 2 700 méq/kg de doubles liaisons oléfiniques,
la composition dans sa totalité contenant 70 à 2 700 méq/kg de doubles liaisons oléfiniques,
à la condition que, quand le polymère est un polyamide et que la composition contient en outre un caoutchouc, ce dernier porte des groupes fonctionnels et soit dispersé dans la matrice.

5. Objet métallique revêtu selon la revendication 4, **caractérisé en ce que** le composé insaturé est choisi dans le groupe consistant en les polyalcénylènes, les esters d'acides carboxyliques insaturés, les esters d'alcools insaturés ainsi que les polymères dont les constituants monomères dérivent au moins partiellement de diènes.

6. Objet métallique revêtu selon l'une des revendications 4 à 5, ou obtenu par le procédé selon la revendication 3, **caractérisé en ce qu'**il s'agit d'une pièce d'un véhicule à moteur ou d'une machine.

7. Objet métallique revêtu selon l'une des revendications 4 à 5 ou obtenu par le procédé selon la revendication 3, **caractérisé en ce qu'**il s'agit d'une conduite de transport, d'une ligne de distribution, d'une ligne de raccordement d'immeuble ou d'une conduite d'alimentation ou d'une conduite d'évacuation.

8. Objet métallique revêtu selon l'une des revendications 4 à 5 ou obtenu par le procédé selon la revendication 3, **caractérisé en ce qu'**il s'agit d'une pièce de construction métallique pour un ouvrage en mer ou un élément de construction d'un bateau ou d'un navire.
